# EUROPEAN PATENT SPECIFICATION

(11) **EP 2 070 644 B1**
(45) Date of publication and mention of the grant of the patent: **16.03.2011**
(21) Application number: 08169514.0
(22) Date of filing: 20.11.2008
(51) Int. Cl.: B23Q 1/01, B23Q 3/06, B23Q 7/05

(54) **Machine tool, particularly of the type of milling machines with moving column**
Werkzeugmaschine, insbesondere der Fräsmaschinenart mit beweglichem Maschinenständer
Machine-outil, en particulier de type fraiseuse dotée d'une colonne mobile

(30) Priority: 05.12.2007 IT PD20070403
(43) Date of publication of application: 17.06.2009
(73) Proprietor: Essetre S.P.A., 36016 Thiene (VI) (IT)
(72) Inventor: Sella, Andrea, 36010 Zane' Vi (IT)
(74) Representative: Modiano, Micaela Nadia

(56) References cited:
- DE-A1- 3 107 436
- DE-U1- 8 900 075

## Description

The present invention relates to a machine tool, particularly of the type of milling machines with moving column.

Various kinds of machine tool of the type of automatic milling machines are currently known.

In the field of this type of machine, the need is felt for systems for retaining the workpiece that are effective in retaining the workpiece in position, at the same time allowing easy machining of its various parts and simple elimination of machining waste.

Further, particularly in the field of the machining of workpieces made of soft material, such as wood, the need is felt for workpiece retention means that do not deform, scratch or generally damage the parts on which they act in order to retain it.

In order to meet this need, currently known machines are usually provided with a vise whose jaws have grip portions made of wood or other soft material and adapted to engage opposite edges of the part to be machined in order to retain it without damaging the engaged parts.

Below such vise there is a compartment for discharging machining waste, and therefore, in order to support the workpiece and prevent it from falling into such compartment, the jaws have teeth that protrude inside the vise and are adapted to support the workpiece when it is not secured between the jaws.

Further, machines of this type are provided with means for feeding and expelling the workpieces, which generally are belts adapted to support the workpiece to position it between the jaws, resting it on the respective teeth, and remove it once machining has ended.

Although this type of machine tool is appreciated, it has drawbacks.

In particular, the edges of the workpiece against which the grip portions of the vise abut in order to retain it cannot be machined directly.

The action of the mill thereon would in fact also affect the grip portions themselves, damaging them (see, for example, DE-31 07436-A).

Therefore, currently, in order to machine these edges, the workpiece has to be repositioned so that it is retained by parts that are distant enough from such edges to allow a machining thereof which does not risk damaging the workpiece retention means.

The aim of the present invention is to provide a machine tool that obviates the above-mentioned drawback, allowing a retention of the workpiece that does not require its repositioning to machine all the parts of its region affected by the action of the tools.

Within this aim, an object of the invention is to provide a machine tool that allows easy elimination of the waste from the machining region while ensuring effective support to the workpiece even when it is positioned or removed from the region of action of the tools.

Another object of the invention is to provide a machine tool that ensures effective retention of the workpiece while avoiding damage thereto.

Another object of the invention is to provide a machine tool that allows easy positioning of the workpiece in the region of action of the tools and further allows easy removal thereof.

Another object of the invention is to provide a machine tool that is structurally simple and easy to use and can be manufactured with relatively low costs.

This aim and these and other objects, which will become better apparent hereinafter, are achieved by a machine tool, particularly of the type of milling machines with moving column, which comprises a footing and a supporting frame for the workpiece, characterized in that it comprises
- means for machining the workpiece, which are supported by said supporting frame,
- a vise element, which is adapted to retain the workpiece in position, each one of its jaws comprising a supporting element for a plurality of roller supports, which are adapted to support, retain in position and move the workpiece,
said roller supports comprising means for the translational motion of rollers from below the workpiece to far from the workpiece, in order to disengage its edges and thus allow their machining.

Further characteristics and advantages of the invention will become better apparent from the following detailed description of a preferred but not exclusive embodiment of the machine tool according to the invention, illustrated by way of non-limiting example in the accompanying drawings, wherein:

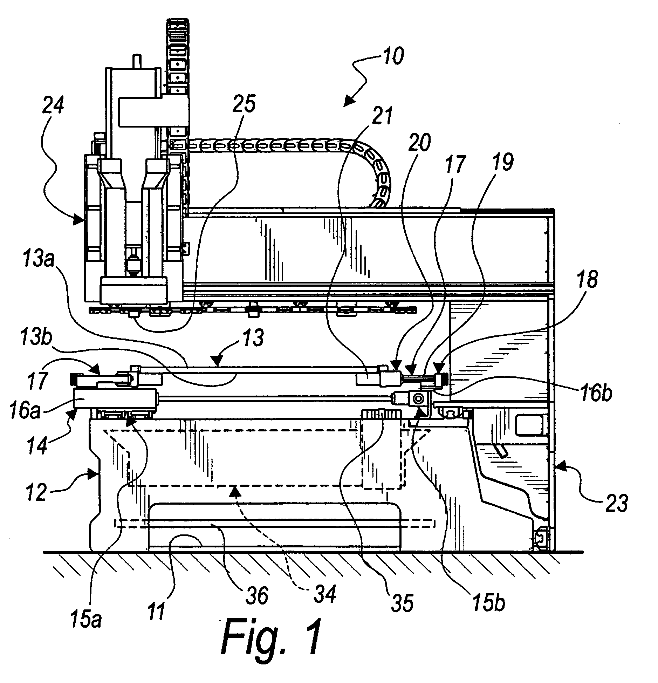

Figure 1 is a front elevation view of a machine tool according to the invention;
Figure 2 is a top plan view of a machine tool according to the invention;

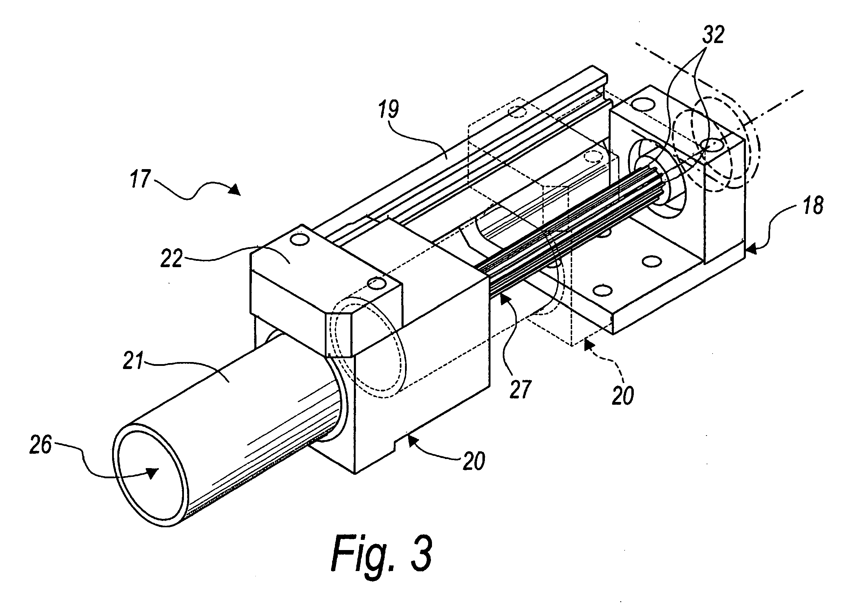

Figure 3 is an enlarged-scale perspective view of a detail of the machine tool according to the invention;
Figures 4 and 5 are views of two configurations of the detail of the machine tool according to the invention shown in Figure 3.

With reference to the figures, the reference numeral 10 generally designates a machine tool, particularly of the type of milling machines with moving column, which comprises a footing 11 and a supporting frame 12 for a workpiece 13.

A particularity of the machine tool 10 according to the invention is that it comprises:
- means for machining the workpiece 13, which are supported by the supporting frame 12,
- a vise element 14, which is adapted to retain in position the workpiece 13, jaws 15a and 15b of which each comprise a supporting element 16a and 16b for a plurality of roller supports 17, which are adapted to support, retain in position and move the workpiece 13.

The roller supports 17 comprise means for translational motion of rollers 18 from below the workpiece 13 to far from the workpiece 13, in order to disengage its edges and thus allow their machining.

Conveniently, the roller supports 17 comprise:
- a base 19 for fixing to the corresponding supporting element 16a or 16b,
- a guide 20, which is supported by the fixing base 19:
- a slider 21, which is slidingly associated with the guide 20,
- one roller 18, which is supported rotatably by the slider 21 and is adapted to support and move the workpiece 13,
- such means for translational motion, which are adapted to produce the translational motion of the slider 21 along the guide 20,
- means for rotating the roller 18,
- abutment means for the workpiece 13, conveniently studs 22, preferably made of plastic material, which are associated with the slide 21 and are adapted to be pushed by the slider 21 against the workpiece 13 in order to retain it in position.

The translational motion means can be actuated by provided actuation means in order to make the corresponding roller support 17 pass at least
- from a first configuration, in which the slider 21 abuts against the workpiece 13, which rests on the roller 18,
- to a second configuration, in which the slider 21 is retracted along the guide 20 and disengaged from the edges of the workpiece 13, in order to allow its machining,
- and vice versa.

Advantageously, the machining means comprise a moving column 23, which can slide along the supporting frame 12 and is provided with a bridge-like arm 24, which supports upper tool holder spindles 25, which can be positioned at the entire extension of a first face 13a of one workpiece 13 retained by the vise element 14.

More particularly, preferably the means for translational motion of the slider 21 along the guide 20 comprise a pneumatic jack.

A cylinder 26 of such pneumatic jack is associated with the roller 18 and a stem 27 of its piston 28 is supported and retained by the fixing base 19.

Further, the rotation means of the roller 18 advantageously comprise
- at least one motor element, conveniently a driving chain 29, which is adapted to turn axially the stem 27, the fixing base 19 comprising means for rotatably supporting the stem 27,
- a transmission flange 30, which is conveniently provided with teeth and is coupled to one or more driving chains 29 and jointly associated with one end of the stem 27,
- a connecting flange 31, which is adapted to connect the cylinder 26 to the stem 27 and is jointly associated with the cylinder 26 so that it can slide along the stem 27 and is supported so that it can rotate by the slider 21,
- means for turning the connecting flange 31, which are provided on the stem 27, for rotation of the stem 27 substantially jointly with the connecting flange 31.

The driving chains 29 are adapted to turn substantially jointly the transmission flange 30, which entrains
- the stem 27 together with
- the connecting flange 31 together with
- the roller 18.

Advantageously, two driving chains 29 are meshed with the transmission flange 30, substantially of each roller support 17, and a first one of these driving chains 29 connects a first support 17a to a second support 17b of the roller supports 17, which is adjacent to the first roller support 17a.

The second of the driving chains 29 connects the first roller support 17a to a third support 17c of the roller supports 17, which is adjacent to the first roller support 17a and is different from the second roller support 17b.

In this manner, the connection of the first roller support 17a, of the second roller support 17b and of the third roller support 17c, and in general of all the roller supports 17 supported by the supporting element 16a or 16b is achieved for their simultaneous actuation.

The means for turning the connecting flange 31 conveniently comprise ribs 32, which are provided longitudinally on the stem 27, the connecting flange 31 being provided with a through hole 33 for the sliding of the stem 27, inside which there are sliding recesses for the ribs 32 which are shaped complementarily thereto.

Advantageously, the actuation means, in order to pass the roller supports 17 from the first configuration to the second configuration and vice versa comprise an electronic system, not shown in the figures, for actuating motors for positioning the moving column 23, which is simultaneously adapted to actuate a pneumatic system for the independent actuation of each pneumatic jack, in order to move the rollers 18 away from the part of the workpiece 13 that is affected by machining and then move them back adjacent thereto once machining has been performed.

Conveniently, the electronic system is connected to the vise element 14 and is further connected, in order to actuate them, to provided motors for the actuation of at least one of the driving chains 29, for each one of the jaws 15a and 15b.

Further, such machining means, conveniently comprise a slide 34, which is supported slidingly by the supporting frame 12 and supports lower tool holder spindles 35, which can be positioned at the entire extension of a second face 13b, which lies substantially opposite the first face 13a of the workpiece 13.

Substantially, the slide 34 is arranged below where the vise element 14 retains the workpiece 13, while the bridge-like arm 24 is arranged above it.

In this manner, the workpiece 13 can be machined simultaneously on the first face 13a and on the second face 13b.

Conveniently, the machine tool 10 comprises an unloading belt 36 for the waste and chips produced during machining, which is arranged on the bottom of the frame 12.

The operation of the machine tool according to the invention is as follows.

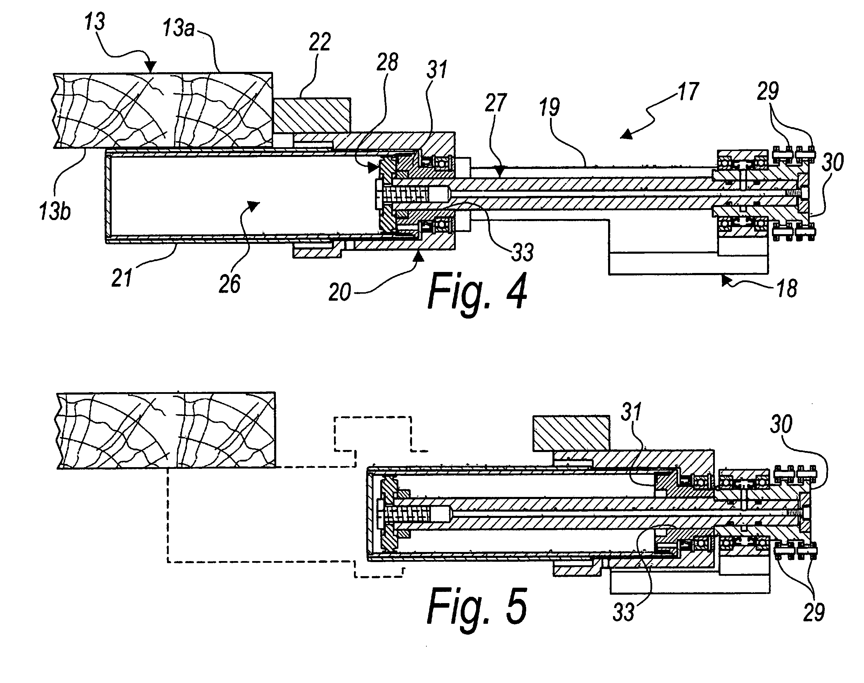

The machine tool 10 is prepared to receive the workpiece 13 by setting the electronic actuation system so that it actuates the vise element 14 so that the mutually opposite roller supports 17 are close enough to support the workpiece 13 without however engaging it with the studs 22, as shown by way of example in broken lines in Figure 5.

After resting the workpiece 13 on at least some rollers 18, the rollers 18 are moved in a coordinated manner by way of the driving chains 29, so as to move the workpiece 13 into the region of action of the tools, which is formed substantially in the region swept by the bridge-like arm 24 during the translational motion of the moving column 23 along the supporting frame 12.

Likewise, after machining, the rollers 18 move the machined workpiece, unloading it from the machine tool 10.

When the workpiece 13 is in position, the electronic system actuates the closure of the vise element 14, so that the workpiece 13 is retained by the roller supports 17, which abut laterally against it with the studs 22.

Machining of the workpiece 13 is performed from the upper face by means of the tools fitted to the upper tool holder spindles 25 of the moving column 23 and optionally on the lower face by the tools fitted to the spindles 35 of the slide 34, which can range, respectively, above and below along the entire longitudinal and transverse extension of the workpiece 13.

When a tool approaches a part of the workpiece 13 that is engaged by one roller support 17, the electronic system actuates, by means of the pneumatic system, the pneumatic jack thereof, which moves it from the first configuration to the second configuration, so that the tool does not damage it during machining of the workpiece 13.

When the tool, during machining, moves away from the roller support 17, the electronic system likewise actuates the pneumatic jack, which returns the roller support 17 from the second configuration to the first configuration in order to retain the workpiece 13 during the machining of different regions thereof.

The roller supports 17 are thus actuated independently by the electronic system when the machining tools approach.

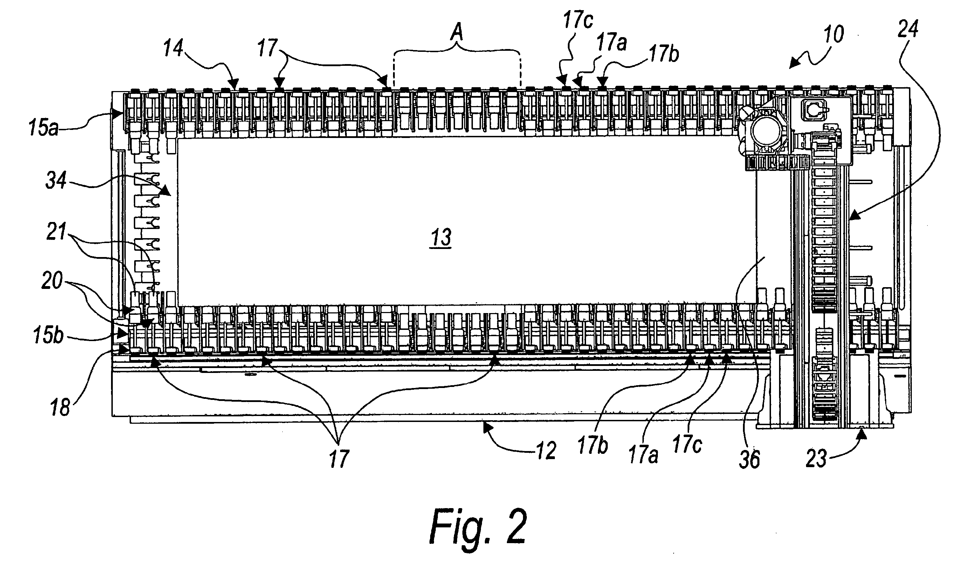

By way of example, Figure 2 illustrates a region A of roller supports 17 in the second configuration, and likewise the roller support 17 shown in Figure 5 is also illustrated in this configuration, whereas Figure 4 illustrates, by way of example, a roller support 17 in the first configuration.

It should be noted that the rotation of the rollers 18, during the loading and unloading from the machine tool 10 of the workpiece 13 that is to be machined or has been machined causes its automatic cleaning.

The rollers 18, by rotating, in fact eliminate waste and chips that might have accumulated on them during machining, limiting the required machine cleaning interventions.

In practice it has been found that the invention achieves the proposed aim and objects, by providing a machine tool that allows a retention of the workpiece that does not require its repositioning in order to machine all the parts of its region affected by the action of the tools.

Further, a machine tool according to the invention allows easy elimination of waste from the machining region while ensuring effective support to the workpiece, even while it is positioned or removed from the region of action of the tools.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the contingent shapes and dimensions, may be any according to requirements and to the state of the art.

## Claims

1. A machine tool (10), particularly of the type of milling machines with moving column, comprising a footing (11) and a supporting frame (12) for the workpiece (13), **characterized in that** it comprises
- means for machining the workpiece (13), which are supported by said supporting frame (12),
- a vise element (14), which is adapted to retain the workpiece (13) in position, each one of the jaws (15a, 15b) of the vise element (14) comprising a supporting element (16a, 16b) for a plurality of roller supports (17), which are adapted to support, retain in position and move the workpiece (13),
said roller supports (17) comprising means for the translational motion of rollers (18) from below the workpiece (13) to far from the workpiece (13), in order to disengage its edges and thus allow their machining.

2. The machine tool according to claim 1, **characterized in that** each one of said roller supports (17) comprises
- a base (19) for fixing to said supporting element (16a, 16b),
- a guide (20), which is supported by said fixing base (19),
- a slider (21), which is associated slidingly with said guide (20),
- a roller (18) of said rollers (18), which is supported rotatably by said slider (21) and is adapted to support and move the workpiece (13),
- said translational motion means suitable for the translational motion of said slider (21) along said guide (20),
- means for the rotation of said roller (18),
- abutment means for the workpiece (13), which are associated with said slider (21) and are adapted to be pushed by it against the workpiece (13) in order to retain it in position,
said translational motion means being actuatable by provided actuation means in order to pass the corresponding roller support (17) at least
- from a first configuration, in which said slider (21) abuts against the workpiece (13) and simultaneously the workpiece (13) rests on said roller (18),
- to a second configuration, in which said slider (21) is retracted, along said guide (20), in order to disengage the edges of the workpiece (13) in order to allow its machining,
- and vice versa.

3. The machine tool according to one of the preceding claims, **characterized in that** said machining means comprise a moving column (23), which can slide along said supporting frame (12) and is provided with a bridge-like arm (24) for supporting upper tool holder spindles (25), which can be positioned at the entire extension of a first face (13a) of a workpiece (13) retained by said vise element (14).

4. The machine tool according to one of the preceding claims, **characterized in that** said machining means comprise a slider (34), which can slide along said supporting frame (12), said slider (34) supporting lower tool holder spindles (35), which can be arranged at the entire extension of a second face (13b), which lies substantially opposite said first face (13a), of a workpiece (13) retained by said vise element (14).

5. The machine tool according to one of the preceding claims, **characterized in that** said means for the translational motion of said slider (21) along said guide (20) comprise a pneumatic jack, the cylinder (26) of which is associated with said roller (18), the stem (27) of the piston (28) of said pneumatic jack being supported and retained by said fixing base (19).

6. The machine tool according to one of the preceding claims, **characterized in that** said means for the rotation of said roller (18) comprise
- at least one element for moving said stem (27), said fixing base (19) comprising means for supporting said stem (27) so that it can rotate,
- a transmission flange (30), which is coupled to said at least one motor element and is jointly associated with one end of said stem (27),
- a flange (31) for connecting said cylinder (26) to said stem (27), which is jointly associated with said cylinder (26), so that it can slide along said stem (27) and is supported so that it can rotate by said slider (21),
- means for turning said connecting flange (31) provided on said stem (27), for turning said stem (27) and said connecting flange (31) substantially jointly,
said at least one motor element being adapted to turn substantially jointly said transmission flange (30) together with said stem (27) together with said connecting flange (31) together with said roller (18).

7. The machine tool according to one of the preceding claims, **characterized in that** said at least one motor element comprises two driving chains (29), a first one of said driving chains connecting a first roller support (17a) of said roller supports (17) to a second one of said roller supports (17b) that is adjacent to said first roller support (17a), the second of said driving chains (29) connecting said first roller support (17a) to a third one of said roller supports (17c), which is adjacent to said first roller support (17a) and is different from said second roller support (17b), for the simultaneous actuation of said first, second and third roller supports (17a, 17b and 17c).

8. The machine tool according to one of the preceding claims, **characterized in that** said means for turning said connecting flange (31) comprise ribs (32) that are arranged longitudinally with respect to said stem (27), said connecting flange (31) having a through hole (33) for the sliding of said stem (27) sliding recesses for said ribs (32) being formed inside said through hole (33).

9. The machine tool according to one of the preceding claims, **characterized in that** said actuation means comprise an electronic actuation system for motors for positioning said moving column (23), which is simultaneously adapted to actuate a pneumatic system for the independent actuation of each one of said pneumatic jacks in order to move said rollers (18) away from the part of the workpiece (13) that is affected by machining and to push them thereat before and after machining.

## Patentansprüche

1. Werkzeugmaschine (10), insbesondere der Fräsmaschinenart, mit beweglichem Maschinenständer, welche eine Basis (11) und einen Halterahmen (12) für das Werkstück (13) enthält, **dadurch gekennzeichnet, dass** sie enthält:
Elemente zum Bearbeiten des Werkstücks (13), welche durch den Halterahmen (12) gehalten sind,
ein Schraubstockelement (14), welches dazu ausgelegt ist, das Werkstück (13) in Position zu beizubehalten, wobei jede von den Klauen (15a, 15b) des Schraubstockelements (14) ein Halteelement (16a, 16b) für eine Mehrzahl von Rollhalterungen (17) enthält, welche dazu ausgelegt sind, das Werkstück (13) zu halten, in Position beizubehalten und zu bewegen,
wobei die Rollhalterungen (17) ein Element für die Verschiebungsbewegung von den Rollen (18) von unterhalb des Werkstückes (13), entfernt von dem Werkstück (13), enthalten, um seine Kanten freizugeben und um somit ihre Maschinenbearbeitung zu ermöglichen.

2. Werkzeugmaschine nach Anspruch 1, **dadurch gekennzeichnet, dass** jede von den Rollhalterungen (17) enthält:
eine Basis (19) zum Fixieren des Halteelements (16a, 16b),
eine Führung (20), welche durch die Fixierungsbasis (19) gelagert ist,
ein Gleitelement (21), welches in Zusammenhang mit der Führung (20) gleitfähig ist,
eine Rolle (18) von den Rollen (18), welche drehbar durch das Gleitelement (21) gelagert ist, und dazu ausgelegt ist, das Werkstück (13) zu halten und zu bewegen,
wobei das Element zur Verschiebungsbewegung zur Verschiebungsbewegung von dem Gleitelement (21) entlang von der Führung (20) geeignet ist,
ein Element zur Umdrehung von der Rolle (18),
Anschlagelemente für das Werkstück (13), welche mit dem Gleitelement (21) in Zusammenhang stehen, und welche dazu ausgelegt sind, dieses gegen das Werkstück (13) zu drücken, um es in Position beizubehalten,
wobei das Element zur Verschiebungsbewegung durch ein bereitgestelltes Betätigungselement betätigbar ist, um die entsprechende Rollenhalterung (17) passieren zu lassen:
von einem ersten Aufbau, bei welchem das Gleitelement (21) gegen das Werkstück (13) anschlägt und das Werkstück (13) gleichzeitig auf der Rolle (18) ruht,
zu einem zweiten Aufbau, bei welchem das Gleitelement (21) entlang von der Führung (20) zurückgezogen ist, um die Kanten von dem Werkstück (13) freizugeben, um deren Maschinenbearbeitung zu ermöglichen,
und umgekehrt.

3. Werkzeugmaschine nach einem der vorhergehenden Ansprüche, **dadurch gekennzeichnet, dass** die Werkzeugmaschine einen Maschinenständer (23) enthält, welcher entlang von dem Halterahmen (12) gleiten kann, und mit einem brückenartigen Ausleger (24) zum Halten von oberen Werkzeughaltespindeln (25) bereitgestellt ist, welche bei der gesamten Erstreckung von einer ersten Fläche (13a) eines Werkstücks (13), welches durch das Schraubzwingenelement (14) beibehalten ist, positioniert werden können.

4. Werkzeugmaschine nach einem der vorhergehenden Ansprüche, **dadurch gekennzeichnet, dass** die Bearbeitungselemente ein Gleitelement (34) enthalten, welches entlang des Halterahmens (12) gleiten kann, wobei das Gleitelement (34) untere Werkzeughaltespindeln (35) hält, welche bei der gesamten Erstreckung von einer zweiten Fläche (13b), welche im Wesentlichen entgegengesetzt zur ersten Fläche (13a) liegt, von einem Werkstück (13), welches durch das Schraubzwingenelement (14) beibehalten ist, angeordnet werden können.

5. Werkzeugmaschine nach einem der vorhergehenden Ansprüche, **dadurch gekennzeichnet, dass** die Elemente für die Verschiebungsbewegung von dem Gleitelement (21) entlang von der Führung (20) eine pneumatische Buchse enthalten, wobei der Zylinder (26) davon mit der Rolle (18) in Zusammenhang steht, wobei der Schaft (27) von dem Kolben (28) von der pneumatischen Buchse durch die Fixierungsbasis (19) gehalten und beibehalten wird.

6. Werkzeugmaschine nach einem der vorhergehenden Ansprüche, **dadurch gekennzeichnet, dass** die Elemente zur Umdrehung von der Rolle (18) enthalten:
zumindest ein Element zur Bewegung des Schaftes (27), wobei die Fixierungsbasis (19) Elemente zum Halten des Schaftes (27) enthält, so dass sich dieser umdrehen kann,
einen Überführungsflansch (30), welcher mit dem zumindest einen Motorelement gekoppelt ist und gemeinsam mit einem Ende von dem Schaft (27) in Zusammenhang steht,
einen Flansch (31) zum Verbinden des Zylinders (26) mit dem Schaft (27), welcher mit dem Zylinder (26) gemeinsam in Zusammenhang steht, so dass dieser entlang des Schaftes (27) gleiten kann und derart gehalten ist, so dass er durch das Gleitelement (21) umdreht werden kann,
ein Element zum Wenden des Verbindungsflansches (31), welcher auf dem Schaft (27) bereitgestellt ist, um den Schaft (27) und den Verbindungsflansch (31) im Wesentlichen gemeinsam zu wenden,
wobei das zumindest eine Motorelement dazu ausgelegt ist, den Überführungsflansch (30) zusammen mit dem Schaft (27) zusammen mit dem Verbindungsflansch (31) zusammen mit der Rolle (18) im Wesentlichen gemeinsam zu wenden.

7. Werkzeugmaschine nach einem der vorhergehenden Ansprüche, **dadurch gekennzeichnet, dass** das zumindest eine Motorelement zwei Antriebsketten (29) enthält, wobei eine erste von den Antriebsketten eine erste Rollenhalterung (17a) von den Rollenhalterungen (17) mit einer zweiten von den Rollenhalterungen (17b), welche an der ersten Rollenhalterung (17a) angrenzt, verbindet, wobei die zweite von den Antriebsketten (29) die erste Rollenhalterung (17a) mit einer dritten von den Rollenhalterungen (17c), welche zu der ersten Rollenhalterung (17a) angrenzt und sich von der zweiten Rollenhalterung (17b) unterscheidet, zur gleichzeitigen Betätigung der ersten, zweiten und dritten Rollenhalterung (17a, 17b und 17c) verbindet.

8. Werkzeugmaschine nach einem der vorhergehenden Ansprüche, **dadurch gekennzeichnet, dass** das Element zum Wenden des Verbindungsflansches (31) Rippen (32) enthält, welche mit Bezug auf den Schaft (27) in Längsrichtung angeordnet sind, wobei der Verbindungsflansch (31) ein Durchgangsloch (33) zum Gleiten des Schaftes (27) hat, wobei Gleit-Aussparungen für die Rippen (32) innerhalb des Durchgangsloches (33) ausgebildet sind.

9. Werkzeugmaschine nach einem der vorhergehenden Ansprüche, **dadurch gekennzeichnet, dass** die Betätigungselemente ein elektronisches Betätigungssystem für Motoren zur Positionierung des Maschinenständers (23) enthalten, welches gleichzeitig dazu ausgelegt ist, ein pneumatisches System für die unabhängige Betätigung von jeder von den pneumatischen Buchsen zu betätigen, um die Rollen (18) von jenem Teil des Werkstückes (13) fortzubewegen, welcher durch die Bearbeitung beeinflusst wird, und um sie vor und nach der Maschinenbearbeitung dorthin zu drücken.

## Revendications

1. Machine-outil (10), en particulier du type fraiseuses à colonne mobile, comprenant un socle (11) et un bâti de soutien (12) pour la pièce à usiner (13), **caractérisée en ce qu'**elle comprend
- des moyens pour usiner la pièce (13), qui sont supportés par ledit bâti de soutien (12),
- un élément formant étau (14), conçu pour maintenir en place la pièce à usiner (13), chacun des mors (15a, 15b) de l'élément formant étau (14) comportant un élément de support (16a, 16b) pour une pluralité de supports (17) à galets, conçus pour supporter, maintenir en place et déplacer la pièce à usiner (13),
lesdits supports (17) à galets comportant des moyens pour le mouvement de translation de galets (18) depuis une position sous la pièce à usiner (13) jusqu'à une position à distance de la pièce (13), afin de s'écarter de ses bords et de permettre ainsi leur usinage.

2. Machine-outil selon la revendication 1, **caractérisée en ce que** chacun desdits supports (17) à galets comporte
- une embase (19) pour la fixation audit élément de support (16a, 16b),
- un guide (20) supporté par ladite embase de fixation (19),
- un curseur (21) associé d'une manière coulissante audit guide (20),
- un galet (18) desdits galets (18), supporté par ledit curseur (21) de manière à pouvoir tourner et conçu pour souvenir et déplacer la pièce à usiner (13),
- lesdits moyens pour mouvement de translation permettant le mouvement de translation dudit curseur (21) le long dudit guide (20),
- un moyen pour la rotation dudit galet (18),
- des moyens de butée pour la pièce à usiner (13), qui sont associés audit curseur (21) et sont conçus pour être poussés par celui-ci contre la pièce à usiner (13) afin de la maintenir en place,
lesdits moyens pour mouvement de translation étant actionnables par des moyens d'actionnement prévus, afin de faire passer ledit support de galet correspondant (17) au moins
- d'une première configuration, dans laquelle ledit curseur (21) bute contre la pièce à usiner (13) et en même temps la pièce (13) repose sur ledit galet (18),
- à une seconde configuration, dans laquelle ledit curseur (21) est rentré, le long dudit guide (20), afin de s'écarter des bords de la pièce à usiner (13) dans le but de permettre son usinage,
- et inversement.

3. Machine-outil selon l'une des revendications précédentes, **caractérisée en ce que** lesdits moyens d'usinage comportent une colonne mobile (23), apte à coulisser le long dudit bâti de soutien (12) et sont pourvus d'un bras (24) analogue à un pont pour supporter des broches porte-outils supérieures (25), qui peuvent être placées sur toute l'étendue d'une première face (13a) d'une pièce à usiner (13) retenue par ledit élément formant étau (14).

4. Machine-outil selon l'une des revendications précédentes, **caractérisée en ce que** lesdits moyens d'usinage comportent un coulisseau (34), apte à coulisser le long dudit bâti de soutien (12), ledit coulisseau (34) supportant des broches porte-outils inférieures (35), qui peuvent être disposées sur toute l'étendue d'une seconde face (13b), laquelle se situe sensiblement à l'opposé de ladite première face (13a), d'une pièce à usiner (13) retenue par ledit élément formant étau (14).

5. Machine-outil selon l'une des revendications précédentes, **caractérisée en ce que** lesdits moyens pour le mouvement de translation dudit curseur (21) le long dudit guide (20) comportent un vérin pneumatique dont le cylindre (26) est associé audit galet (18), la tige (27) du piston (28) dudit vérin pneumatique étant supportée et retenue par ladite embase de fixation (19).

6. Machine-outil selon l'une des revendications précédentes, **caractérisée en ce que** lesdits moyens pour la rotation dudit galet (18) comportent
- au moins un élément pour déplacer ladite tige (27), ladite embase de fixation (19) comportant un moyen pour supporter ladite tige (27) afin qu'elle puisse tourner,
- une bride de transmission (30), qui est accouplée avec ledit au moins un élément moteur et coopère avec une extrémité de ladite tige (27),
- une bride (31) pour relier ledit cylindre (26) à ladite tige (27), qui coopère avec ledit cylindre (26), de façon qu'elle puisse coulisser le long de ladite tige (27), et qui est supportée par ledit curseur (21) afin de pouvoir tourner,
- des moyens pour faire tourner ladite bride de liaison (31) disposée sur ladite tige (27), afin de faire tourner sensiblement conjointement ladite tige (27) et ladite bride de liaison (31),
- ledit au moins un élément moteur étant conçu pour faire tourner sensiblement conjointement ladite bride de transmission (30) avec ladite tige (27) avec ladite bride de liaison (31) avec ledit galet (18).

7. Machine-outil selon l'une des revendications précédentes, **caractérisée en ce que** ledit au moins un élément moteur comporte deux chaînes d'entraînement (29), une première desdites chaînes d'entraînement reliant un premier support (17a) de galet parmi lesdits supports (17) de galets à un deuxième (17b) desdits supports de galets qui est adjacent audit premier support (17a) de galet, la seconde desdites chaînes d'entraînement (29) reliant ledit premier support (17a) de galet à un troisième (17c) desdits supports de galets, qui est adjacent audit premier support (17a) de galet et est différent dudit deuxième support (17b) de galet, pour l'actionnement simultané desdites premier, deuxième et troisième supports (17a, 17b et 17c) de galets.

8. Machine-outil selon l'une des revendications précédentes, **caractérisée en ce que** lesdits moyens pour faire tourner ladite bride de liaison (31) comportent des nervures (32) disposées longitudinalement par rapport à ladite tige (27), ladite bride de liaison (31) ayant un trou traversant (33) pour le coulissement de ladite tige (27), des rainures de coulissement pour lesdites nervures (32) étant ménagées à l'intérieur dudit trou traversant (33).

9. Machine-outil selon l'une des revendications précédentes, **caractérisée en ce que** lesdits moyens d'actionnement comportent un système électronique d'actionnement pour des moteurs pour le positionnement de ladite colonne mobile (23), qui est conçu pour actionner simultanément un système pneumatique pour l'actionnement indépendant de chacun desdits vérins pneumatiques afin d'éloigner lesdits galets (18) de la partie de la pièce à usiner (13) affectée par l'usinage et de les pousser contre celle-ci avant et après l'usinage.
